# FASCICULE DE BREVET EUROPEEN

(11) **EP 4 323 177 B1**
(45) Date de publication et mention de la délivrance du brevet: **02.07.2025**
(21) Numéro de dépôt: 22714453.2
(22) Date de dépôt: 21.03.2022
(51) Int. Cl.: B29D 99/00

(54) **PROCEDE DE FABRICATION D'UN DISPOSITIF DE CLOISON EN MATERIAU COMPOSITE, DISPOSITIF DE CLOISON OBTENU, ET ELEMENTS CONSTITUTIFS D'AERONEF UTILISANT UN TEL DISPOSITIF DE CLOISON**
VERFAHREN ZUR HERSTELLUNG EINER TRENNVORRICHTUNG AUS VERBUNDMATERIAL, DADURCH ERHALTENE TRENNVORRICHTUNG UND LUFTFAHRZEUGBESTANDTEILE MIT EINER SOLCHEN TRENNVORRICHTUNG
METHOD FOR MANUFACTURING A PARTITION DEVICE MADE OF COMPOSITE MATERIAL, PARTITION DEVICE OBTAINED, AND CONSTITUENT AIRCRAFT ELEMENTS USING SUCH A PARTITION DEVICE

(30) Priorité: 13.04.2021 FR 2103799
(43) Date de publication de la demande: 21.02.2024
(73) Titulaire: Conseil et Technique, 31570 Sainte-Foy-d'Aigrefeuille (FR)
(72) Inventeur: VALEMBOIS, Guy, 31650 Lauzerville (FR)
(74) Mandataire: Cabinet Bleger-Rhein-Poupon
(86) Numéro de dépôt international: PCT/EP2022/057370
(87) Numéro de publication internationale: WO 2022/218652

(56) Documents cités:
- WO-A1-2012/150240
- WO-A1-2012/156525
- WO-A1-2019/229074
- LU-A1- 86 659

## Description

La présente invention a pour objet un procédé de fabrication d'un dispositif de cloison en matériau composite destiné à résister à diverses sollicitations tout en étant allégé, ainsi que le dispositif de cloison obtenu, et des éléments constitutifs d'aéronef fabriqués au moyen d'un tel dispositif de cloison.

Un tel dispositif de cloison peut être utilisé dans des domaines très variés, tels que, non limitativement, le bâtiment et l'aéronautique. Si dans le bâtiment le critère de légèreté trouve une utilité lors de la construction, dans l'aéronautique c'est prioritairement en utilisation.

Un dispositif de cloison selon l'invention peut ainsi, dans le domaine aéronautique, trouver des débouchés pour la construction de cellules d'avion ou d'hélicoptère, ainsi que de plancher, portes, trappes et même structure de siège pour ces mêmes avion et hélicoptères.

La description qui suit se rapporte essentiellement à l'aéronautique, tout en sachant que le dispositif de cloison selon l'invention peut s'appliquer à d'autres domaines. De plus, cette description est plus particulièrement consacrée à un dispositif de cloison pour la réalisation d'une porte d'aéronef, sachant que d'autres parties d'un aéronef peuvent être réalisées à partir d'un tel dispositif de cloison, à savoir, non limitativement, des parties de cellules du fuselage, mais également des éléments de plancher.

Dans le domaine de l'aéronautique, les cloisons constituant les cellules du fuselage d'un aéronef consistent traditionnellement en une peau portée par des lisses longitudinales, elles-mêmes fixées sur des cadres répartis longitudinalement. Une telle architecture nécessite de nombreux points d'assemblage.

Lorsque l'on souhaite réaliser une telle structure en matériau composite, il faut soit matérialiser tous les points d'assemblage, ce qui est délicat et complexe, soit une mise œuvre dans un moule très complexe pour réaliser une structure monolithique, méthode actuellement utilisée dans la réalisation des portes composites d'aéronefs.

Une autre solution composite consiste à réaliser des panneaux sandwich composés de deux peaux distantes séparées par une âme souvent réalisée en mousse ou en nid d'abeille. La distance entre les deux peaux, associée à la transmissibilité des flux d'effort par l'âme, permet la tenue mécanique en flexion de la structure.

Cette solution n'est toutefois pas adaptée à des formes complexes ou nécessitant la présence de volumes entre les deux peaux structurelles pour y placer des mécanismes, par exemple dans le cas des portes d'aéronefs.

On connaît ainsi par le document US 6 047 925 une trappe ou une porte si elle est de petite taille, réalisée sous forme d'un sandwich composite. On peut constater dans ce document, qu'il est très difficile de rapporter les éléments de fixation nécessaires à la tenue de la porte sur la structure de l'avion, et également que les mécanismes complexes nécessaires au fonctionnement de la porte ne peuvent pas être intégrés à l'intérieur de la porte.

Le document US 6 554 226 décrit une porte venant de moulage d'un matériau composite, reproduisant exactement les caractéristiques d'une porte métallique, selon le concept du « black metal », qui conduit à un résultat d'une faible efficacité technico-économique.

Les documents EP 2 415 662 et WO 2007/062641 décrivent également des portes d'aéronef, et montrent la complexité de faire coopérer une peau avec une traverse de structure porteuse. Le document WO2012/156525A1 divulgue un procédé de fabrication d'un dispositif de cloison en matériau composite par assemblage de renforts sur un panneau.

La présente invention a pour but de proposer un procédé de fabrication d'un dispositif de cloison en matériau composite destinée à résister à diverses sollicitations tout en étant allégée, pour permettre d'apporter des solutions aux inconvénients exposés ci-dessus.

Le procédé de fabrication d'un dispositif de cloison en matériau composite selon l'invention se caractérise en ce qu'il consiste à réaliser successivement les opérations suivantes :
- obtenir, par un procédé de mise en forme convenant au matériau composite utilisé, un premier panneau présentant d'une part une forme propre à sa destination, éventuellement courbe, et ainsi définir une face dite intérieure et une face dite extérieure ; et comportant d'autre part des déformations longitudinales de profil en oméga, pour former des nervures saillant de la face dite intérieure,
- découper périphériquement ce premier panneau à la forme nécessaire,
- obtenir, par un procédé de mise en forme convenant au matériau composite utilisé, un second panneau présentant d'une part une forme identique à celle dudit premier panneau, et ainsi définir une face dite intérieure et une face dite extérieure inverses de celles dudit premier panneau ; et comportant d'autre part des déformations longitudinales de profil en oméga de profondeur égale ou non à celles du premier panneau, pour former des nervures saillant de la face dite intérieure, et selon une orientation différente de celle des déformations dudit premier panneau,
- découper périphériquement ce second panneau à la forme nécessaire,
- assembler les deux panneaux face intérieure de l'un contre face intérieure de l'autre, de sorte qu'elles se touchent par le croisement des nervures,
- solidariser les deux panneaux au niveau des zones de contact desdites nervures.

Selon une caractéristique additionnelle du procédé selon l'invention, les premier et second panneaux viennent de la mise en forme par déformation à chaud sous presse de flans de matériau composite thermoformables.

Selon une variante du procédé selon l'invention, les premier et second panneaux viennent du moulage d'un matériau composite thermodurcissable.

Selon une caractéristique additionnelle du procédé selon l'invention, les nervures d'un panneau croisent celles de l'autre panneau à angle droit.

Selon une autre caractéristique additionnelle du procédé selon l'invention, les premier et second panneaux étant réalisés en matériau composite thermoplastique, et on les solidarise par soudage.

Selon une autre caractéristique additionnelle du procédé selon l'invention, on solidarise les deux panneaux par collage.

Selon une autre caractéristique additionnelle du procédé selon l'invention, on solidarise les deux panneaux par l'intermédiaire d'éléments annexes de fixation.

Il est à noter que l'utilisation d'éléments annexes de fixation peut se superposer à la solidarisation par soudage ou collage.

Selon une autre caractéristique additionnelle du procédé selon l'invention, les éléments annexes de fixation consistent en des paires d'éclisses, une première éclisse comprenant une face conformée avec le fond d'une déformation faite dans un panneau et dans laquelle déformation elle est introduite, et une seconde éclisse comprenant une face conformée avec le fond d'une déformation faite dans l'autre panneau et dans laquelle déformation elle est introduite, et en ce qu'elles sont reliées fixement au travers de moyens de liaison qui traversent lesdits fonds de déformations au niveau des zones de contact des nervures.

Selon une autre caractéristique additionnelle du procédé selon l'invention les éléments annexes de fixation consistent en des ferrures de connexion, disposées en extrémité de l'assemblage de deux panneaux, et comprenant d'une part un élément conformé pour coopérer avec l'extrémité d'une déformation d'un panneau, et d'autre part un élément pour recevoir en appui l'autre panneau.

Selon une autre caractéristique additionnelle du procédé selon l'invention, les ferrures de connexion disposées en extrémité de l'assemblage de deux panneaux, comportent des moyens de coopération avec d'autres panneaux.

La cloison obtenue par le procédé selon l'invention présente des propriétés de résistance aux sollicitations extérieures par le fait que cette combinaison judicieuse permet d'offrir une résistance à la flexion dans n'importe quelle direction.

Dans le cas non limitatif d'application à une porte d'aéronef, une telle cloison est en rupture avec les formes habituelles, elle est adaptée à une conception composite qui minimise grandement le coût de production par :
- la réduction significative du nombre de pièces constituant la structure de la porte,
- la facilité de production des deux peaux,
- la facilité d'inspection de la santé matière des deux peaux,
- la facilité de jonction des deux peaux

Selon une autre caractéristique additionnelle du procédé selon l'invention, on comble les formes en creux d'au moins un panneau, en sorte de créer une surface continue.

Selon une autre caractéristique additionnelle du procédé selon l'invention, on comble les formes en creux d'au moins un panneau, et on recouvre la face ainsi comblée d'une peau non structurelle.

Selon une autre caractéristique additionnelle du procédé selon l'invention, on insère dans les volumes créés entre les deux panneaux des mécanismes et/ou un matériau isolant phonique et/ou thermique.

Selon une autre caractéristique additionnelle du procédé selon l'invention, lors de l'opération de découpe périphérique de l'un et/ou l'autre des deux panneaux, on détoure les nervures pour laisser une émerger du contour une partie extrême, que l'on usine pour servir d'élément de liaison.

Selon une autre caractéristique additionnelle du procédé selon l'invention, lors de la mise en forme du et/ou des panneaux, on ferme l'une et/ou l'autre extrémité d'une ou de plusieurs déformations de profil en oméga.

La résistance à la flexion des extrémités détourées des nervures, permettent la réalisation de fixation tout en s'affranchissant de ferrures. Le fait que les extrémités des nervures soient fermées, permet d'accroître la résistance à la flexion.

La présente invention a également pour objet un dispositif de cloison réalisée selon le procédé décrit ci-dessus, ainsi que d'éléments constitutifs d'aéronef tels qu'un élément de cellule, une porte, un plancher.

Les avantages et les caractéristiques du procédé de fabrication d'un dispositif de cloison en matériau composite selon l'invention, ressortiront plus clairement de la description qui suit et qui se rapporte au dessin annexé, lequel en représente un mode de réalisation non limitatif.

Dans le dessin annexé:
- les figures 1a, 1b et 1c, représentent des vues schématiques en perspective d'étapes successives du procédé de fabrication d'un dispositif de cloison en matériau composite,
- la figure 2 représente une vue en perspective avec écorché partiel, d'une porte d'aéronef constituée d'un dispositif de cloison selon l'invention.
- les figures 3a et 3b, représentent des vues schématiques en perspective d'étapes successives du procédé de fabrication d'un autre dispositif de cloison en matériau composite,
- la figure 4 représente une vue en coupe longitudinale du dispositif de cloison de la figure 2b,
- la figure 5 représente une vue en coupe transversale du dispositif de cloison de la figure 2b,
- la figure 6 représente une vue schématique en perspective et en éclaté d'éléments entrant dans le procédé de fabrication d'un dispositif de cloison en matériau composite,
- la figure 7 représente une vue en coupe d'une partie d'un dispositif de cloison selon l'invention,
- la figure 8 représente une vue partielle en perspective d'un dispositif de cloison selon l'invention, destiné à la réalisation d'un plancher,
- la figure 9 représente une vue en perspective d'une ferrure utilisée pour la réalisation du plancher de la figure 8,
- la figure 10 représente une vue en perspective d'une partie d'une cellule d'avion, comportant un plancher reproduit à la figure 8.
- la figure 11 représente une vue en perspective d'une structure de siège, réalisée avec un dispositif de cloison selon l'invention.

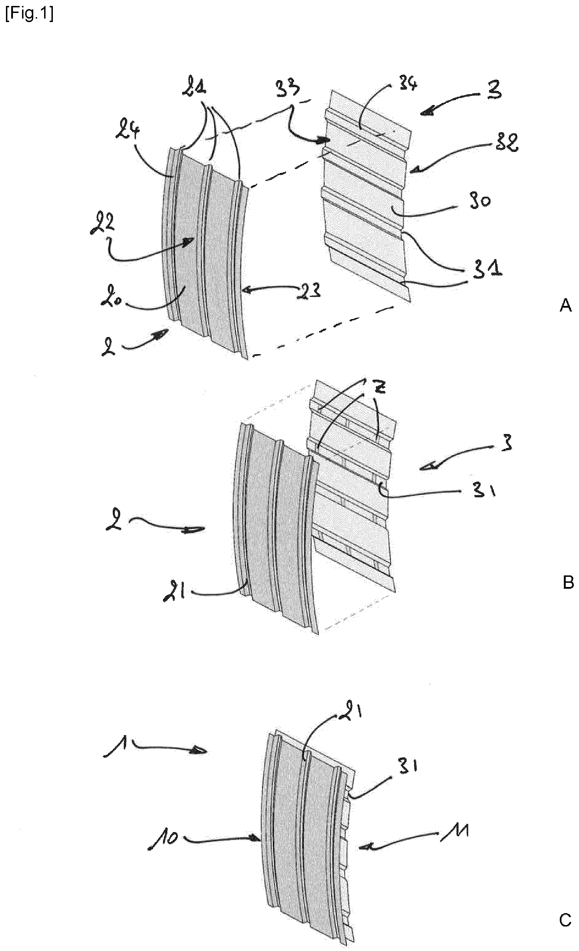

En référence au figures 1a, 1b et 1c, on peut voir que le procédé de fabrication d'un dispositif de cloison 1 en matériau composite selon l'invention, visible sur la figure 1c, débute par la fabrication de deux panneaux 2 et 3.

On notera que le dispositif de cloison 1 qui va être décrit consiste, non limitativement en un élément constitutif d'un fuselage d'avion, qui peut être une partie de cellule de ce fuselage ou bien une porte, et à cet effet ce dispositif de cloison 1 présente une certaine courbure, sa face convexe 10 correspondant au côté extérieur du fuselage, tandis que sa face concave 11 correspond à la face intérieure du fuselage.

Bien entendu, dans le cas d'une autre partie constitutive d'un avion tel qu'un élément de plancher par exemple, le dispositif de cloison est plan.

Par ailleurs, à titre d'exemple non limitatif, la description ci-dessous se rapporte à l'utilisation d'un matériau composite thermoformable. On notera donc que dans le cas d'utilisation d'un matériau thermodurcissable, les panneaux 2 et 3 seraient obtenus par une opération de moulage par polymérisation.

Chacun des panneaux 2 et 3 vient de la déformation à chaud sous presse d'un flan de composite thermoformable, respectivement 20 et 30, en l'occurrence de forme rectangulaire.

Le flan 20 est déformé pour d'une part lui donner une forme courbe, en l'occurrence il est cintré dans le sens de la longueur, et d'autre part créer des déformations de type oméga, créant des nervures longitudinales 21 qui par conséquent sont également courbes.

Les déformations sont créées dans la face convexe 22 dite extérieure, en sorte que les nervures 21 fassent saillie de la face concave 23 dite intérieure.

Le flan 30 est déformé pour d'une part lui donner la même forme courbe à savoir qu'il est également cintré dans le sens de la longueur, et d'autre part créer des déformations de type oméga, créant des nervures transversales 31 qui par conséquent sont rectilignes.

Les déformations sont créées dans la face concave 32 dite extérieure, en sorte que les nervures 31 fassent saillie de la face convexe 33 dite intérieure.

Les panneaux 2 et 3 sont destinés à être assemblés l'un à l'autre, faces intérieures 23 et 33 l'une contre l'autre, et plus particulièrement par l'intermédiaire des nervures 21 et 31, et de leurs parties respectivement 24 et 34 qui constituent les fonds des déformations.

Sur la figure 1b, on a représenté sur les nervures 31, les zones Z de contact avec les nervures 21 lors du rapprochement des deux panneaux 2 et 3, pour former le dispositif de cloison 1 de la figure 1c.

On notera que dans ce mode de réalisation particulier les nervures 21 sont parallèles, de même que les nervures 31, et que par conséquent elles se croisent à angle droit lors du rapprochement des panneaux 2 et 3. Il pourrait en être autrement, les nervures d'un même panneau pourraient être parallèles et croiser les nervures de l'autre panneau non perpendiculairement, et ces nervures d'un même panneau pourraient ne pas être parallèles, de nombreuses combinaisons sont bien entendu envisageables.

On peut également noter que les déformations réalisées dans un panneau peuvent être différentes de celles réalisées dans l'autre panneau, notamment en termes de profondeur en sorte que les nervures de l'un soient plus hautes que celles de l'autre.

Il est également à noter que selon le procédé, on réalise une découpe périphérique après l'opération de déformation, sauf à ce que le flan, 20 ou 30, soit de dimensions conformes à la forme du panneau, respectivement 2 et 3.

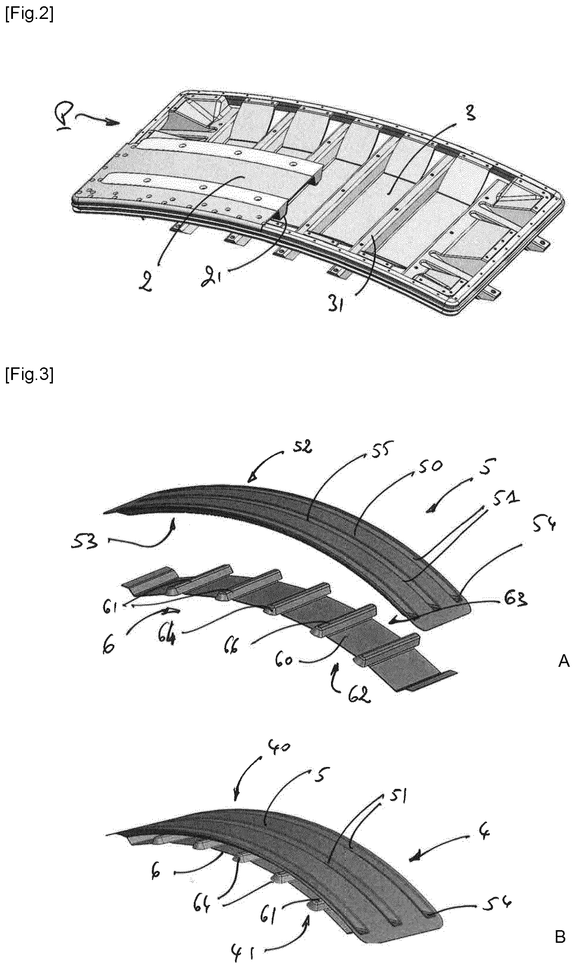

Le dispositif de cloison 1 obtenu, peut permettre la fabrication d'une porte d'aéronef P, telle que celle représentée sur la figure 2.

En référence maintenant aux figures 3a et 3b, on peut voir un dispositif de cloison 4 réalisé selon le procédé, de forme courbe et comprenant une face convexe 40 et une face concave 41, venant de l'assemblage de deux panneaux 5 et 6.

Le panneau 5 vient de la déformation d'un flan 50 rectangulaire cintré dans le sens de la longueur, et comprenant des déformations de type oméga, créant des nervures longitudinales courbes 51, tandis que panneau 6 vient de la déformation d'un flan 60 rectangulaire cintré également dans le sens de la longueur, et comprenant des déformations de type oméga, créant des nervures transversales rectilignes 61.

Les déformations du flan 50 sont créées dans sa face convexe 52 dite extérieure, en sorte que les nervures 51 fassent saillie de sa face concave 53 dite intérieure. De même les déformations du flan 60 sont créées dans sa face concave 62 dite extérieure, en sorte que les nervures 61 fassent saillie de la face convexe 63 dite intérieure.

On notera de plus que les nervures 51 ne s'étendent pas sur toutes la longueur du flan 50 en sorte qu'elles sont fermées à leurs extrémités 54.

Les nervures 61 débordent les bords latéraux 64 du flan 60 et sont fermées à leurs extrémités 65, ce qui obtenu par la création de nervures 61 partielles comme sont créées les nervures 51, puis par découpage périphérique, conformément au procédé selon l'invention.

La configuration des parties extrêmes des nervures 61, à savoir fermées à leurs extrémités 65, confère à ces parties qui débordent les bords latéraux 64, une résistance à la flexion qui autorise leur utilisation dans un but de fixation, et permet de s'affranchi de l'usage de ferrure de liaison.

Les nervures 51 et 61 peuvent être destinées à loger des éléments annexes tels que des renforts ou des moyens de fixation, les extrémités fermées 54 et 65 permettant de dissimuler si nécessaires ces éléments annexes.

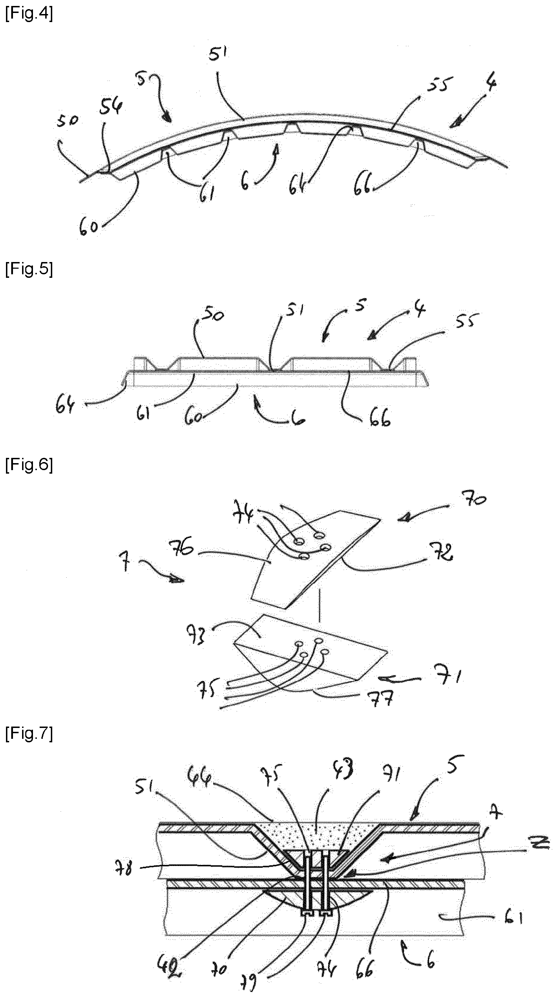

Les figures 4 et 5 montrent l'assemblage des deux panneaux 5 et 6, par mise en contact des nervures 51 avec les nervures 61, et plus exactement les parties 55 et 66 qui constituent les fonds des déformations.

La solidarisation entre eux des panneaux, 2 et 3, et 5 et 6, peut être réalisée de différentes manières, par exemple, non limitativement, par collage, par soudage, par liaison mécanique, la liaison par soudage nécessitant que le composite soit thermoformable. Il est de plus possible que le collage ou le soudage soit associé à une liaison mécanique.

La liaison mécanique peut par exemple consister en un rivetage, mais de préférence on utilise des éclisses, telles que représentées sur la figure 5, et tel que cela est visible sur la figure 6.

La figure 6 montre une liaison mécanique 7 comprenant deux éclisses 70 et 71 de formes identiques, destinées à venir se loger chacune dans une déformation de type oméga, contre le fond de la déformation, et à cet effet, elles comportent chacune une partie plane respectivement 72 et 73, apte à venir en contact étroit avec un fond. Les éclisses 70 et 71 sont par conséquent destinées à se croiser.

Les éclisses 70 et 71 sont percées de trous, respectivement 74 et 75, d'axes perpendiculaires aux faces planes respectivement 72 et 73, en l'occurrence quatre, répartis en sorte que lorsque les éclisses 70 et 71 sont positionnées perpendiculairement l'une par rapport à l'autre, chaque trou 74 soit coaxial à un trou 75. Les trous d'une éclisse, en l'occurrence les trous 75 de l'éclisse 71, sont taraudés, tandis que les trous 74 de l'éclisse 70 sont chanfreinés pour loger des têtes de vis non représentées.

De manière avantageuse, la face, respectivement 76 et 77, opposée la face plane, respectivement 72 et 73, est bombée, permettant un allègement de l'éclisse, respectivement 70 et 71.

D'autre part, les faces latérales 78, ne sont pas perpendiculaires à la face plane, respectivement 72 et 73, mais inclinées, allant en s'évasant depuis la face plane, respectivement 72 et 73 vers la face bombée, respectivement 76 et 77, en sorte de pouvoir épouser étroitement la forme intérieure des déformations.

Bien entendu les éclisses pourraient présenter des formes plus simples, en étant par exemple constituées de barres parallélépipèdiques.

En référence à la figure 7, on peut voir une partie du dispositif de cloison 4, et notamment une zone d'assemblage des panneaux 5 et 6 au moyen d'une liaison mécanique 7.

Les panneaux 5 et sont accolés, les nervures 51 et 61 se croisent, les fonds 55 et 66 des déformations sont en contact, éventuellement collées ou soudées, tandis qu'une éclisse 70 est disposée contre le fond 66 et qu'une éclisse 71 est disposée contre le fond 55, et que ces fonds 55 et 66 sont, au niveau de la zone de contact Z, percés de trous 42 au droit des trous 74 et 75, pour permettre le passage de vis 79, afin de brider les deux panneaux 5 et 6.

En complément de la fabrication du dispositif de cloison 4, l'intérieur de la nervure 51 est rempli d'un matériau de comblement 43 tel que de la mousse par exemple, tandis qu'une peau 44, non structurelle, recouvre l'ensemble de la face extérieure 53 du panneau 5.

En complément également, le volume intérieur du dispositif de cloison 4, c'est-à-dire le volume entre les nervures 51 et 61, peut être rempli d'un matériau isolant phonique et/ou thermique.

On notera également qu'il peut être nécessaire, pour la réalisation de parois de grandes dimensions par exemple, d'abouter des dispositifs de cloison, dans ce cas on utilise des éclisses pour relier entre eux les panneaux de dispositifs de cloison différents.

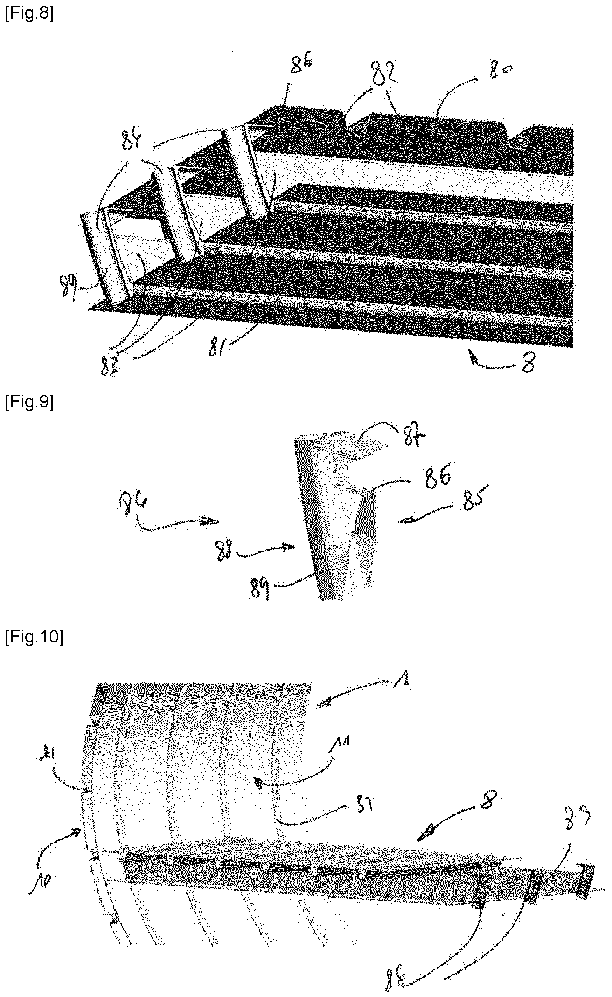

En référence maintenant à la figure 8, on peut voir un dispositif de cloison 8, de forme générale plane, et plus particulièrement destiné à être positionné horizontalement, pour la réalisation d'un plancher, notamment d'aéronef.

Le dispositif de cloison 8 est issu de l'assemblage de deux panneaux, supérieur 80 et inférieur 81, munis chacun de nervures parallèles, respectivement 82 et 83, qui se croisent lors de l'assemblage en des zones Z.

L'assemblage est complété par des éléments annexes de fixation, telles que des ferrures de connexion 84, dont une est représentée sur la figure 9, laquelle comporte une face interne 85 conformée pour s'adapter en bout du dispositif de cloison 8, c'est-à-dire présentant d'une part un élément saillant 86 s'engageant dans l'extrémité de la nervure qui s'ouvre en extrémité, en l'occurrence une nervure 83 du panneau 81, et d'autre part un élément d'appui 87 qui vient au contact de la face interne de l'autre panneau, en l'occurrence 80.

De telles ferrures 84, qui peuvent être réalisées en métal ou en matériau composite, permettent de garantir l'écartement des deux panneaux 80 et 81, en extrémité du dispositif de cloison 8, lorsque les zones Z sont éloignées de cette extrémité.

Les ferrures de connexion 84 comportent, extérieurement par rapport à la face interne 85, une face externe 88 présentant un profil particulier, saillant par rapport à l'extrémité du dispositif de cloison 8.

En référence à la figure 10, on peut voir un dispositif de cloison 8 constituant un plancher pour une cellule d'avion. La cellule est constituée d'un dispositif de cloison 1, qui diffère du dispositif de cloison 1 de la figure 1, en ce que les nervures 31 de la face interne convexe 11 sont courbes, et donc dans des plans verticaux parallèles.

Ainsi, comme cela est visible, les ferrures de connexion 84 qui équipent le dispositif de cloison 8 sont chacune engagées dans une nervure 31 par leur face externe 88, qui présente à cet effet une empreinte mâle 89 de forme complémentaire de cette nervure 31.

Les ferrures 84 permettent la solidarisation du dispositif de cloison 8 au dispositif de cloison 1, c'est-à-dire du plancher à la paroi de la cellule.

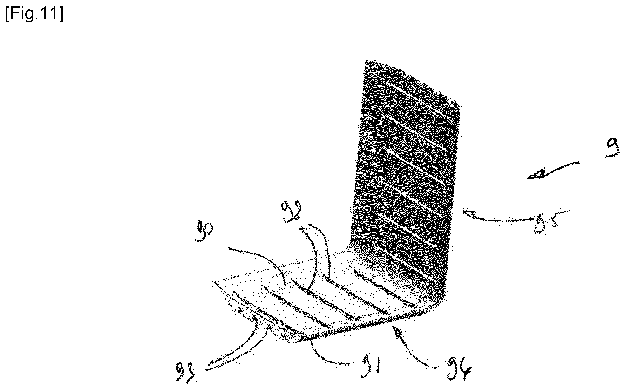

En référence maintenant à la figure 11, on peut voir un autre objet obtenu par le procédé selon l'invention. Il s'agit d'une structure 9 de siège, constituée de l'assemblage de deux panneaux 90 et 91 munis de nervures, respectivement 92 et 93, et pliés pour former une assise 94 et un dossier 95.

Bien entendu d'autres objets peuvent être réalisés à partir d'un dispositif de cloison obtenu par le procédé selon l'invention.

## Revendications

1. Procédé de fabrication d'un dispositif de cloison composite **caractérisé en ce qu'**il consiste à réaliser successivement les opérations suivantes :
- obtenir, par un procédé de mise en forme convenant au matériau composite utilisé dans ladite fabrication, un premier panneau (2; 5 ; 80) présentant d'une part une forme propre à sa destination, éventuellement courbe, et ainsi définir une face dite intérieure (23; 53) et une face dite extérieure (22; 52); et comportant d'autre part des déformations longitudinales (21; 51 ; 82) de profil en oméga, pour former des nervures saillant de la face dite intérieure (23; 53),
- découper périphériquement ce premier panneau (2; 5 ; 80) à la forme nécessaire,
- obtenir, par un procédé de mise en forme convenant au matériau composite utilisé, un second panneau ( 3 ; 6 ; 81) présentant d'une part une forme identique à celle dudit premier panneau (2; 5 ; 80), et ainsi définir une face dite intérieure ( 33 ; 63) et une face dite extérieure ( 32 ; 62) inverses de celles dudit premier panneau (2; 5 ; 80) ; et comportant d'autre part des déformations longitudinales (31 ; 61 ; 83) de profil en oméga de profondeur égale ou non à celles du premier panneau (2; 5 ; 80), pour former des nervures saillant de la face dite intérieure ( 33 ; 63), et selon une orientation différente de celle des déformations (21; 51 ; 82) dudit premier panneau (2; 5 ; 80),
- découper périphériquement ce second panneau (3 ; 6 ; 81) à la forme nécessaire,
- assembler les deux panneaux (2, 3 ; 5, 6 ; 80, 81) face intérieure de l'un (23; 53) contre face intérieure de l'autre ( 33 ; 63), de sorte qu'elles se touchent par le croisement des nervures (21, 31 ; 51, 61 ; 82, 83),
- solidariser les deux panneaux (2, 3 ; 5, 6 ; 80, 81) au niveau des zones (Z) de contact desdites nervures (21, 31 ; 51, 61 ; 82, 83).

2. Procédé selon la revendication 1, **caractérisé en ce que** les premier et second panneaux (2, 3 ; 5, 6 ; 80, 81)) viennent du moulage d'un matériau composite thermodurcissable.

3. Procédé selon la revendication 1, **caractérisé en ce que** les premier et second panneaux (2, 3 ; 5, 6 ; 80, 81) viennent de la mise en forme par déformation à chaud sous presse de flans (20, 30 ; 50, 60) de matériau composite thermoformable.

4. Procédé selon la revendication 1, **caractérisé en ce que** les nervures (21; 51 ; 82) d'un panneau (2; 5; 80) croisent celles (31 ; 61 ; 83) de l'autre panneau (3; 6 ; 81) à angle droit.

5. Procédé selon la revendication 3 ou la revendication 4, **caractérisé en ce que** les premier et second panneaux (2, 3; 5, 6; 80, 81) étant réalisés en matériau composite thermoplastique, et on les solidarise par soudage.

6. Procédé selon l'une quelconque des revendications 1 à 4, **caractérisé en ce qu'**on solidarise les deux panneaux (2, 3; 5, 6; 80, 81) par collage.

7. Procédé selon l'une quelconque des revendications 1 à 6, **caractérisé en ce qu'**on solidarise les deux panneaux (2, 3; 5, 6; 80, 81) par l'intermédiaire d'éléments annexes de fixation (7 ; 84).

8. Procédé selon la revendication 7, **caractérisé en ce que** les éléments annexes de fixation (7) consistent en des paires d'éclisses (70, 71), une première éclisse (70) comprenant une face (72) conformée avec le fond d'une déformation (61) faite dans un panneau (6) et dans laquelle déformation (61) elle est introduite, et une seconde éclisse (71) comprenant une face (73) conformée avec le fond d'une déformation (51) faite dans l'autre panneau (5) et dans laquelle déformation (51) elle est introduite, et **en ce qu'**elles sont reliées fixement au travers de moyens de liaison (79) qui traversent lesdits fonds de déformations au niveau des zones de contact (Z) des nervures (51, 61).

9. Procédé selon la revendication 7, **caractérisé en ce que** les éléments annexes de fixation consistent en des ferrures de connexion (84), disposées en extrémité de l'assemblage de deux panneaux (80, 81), et comprenant d'une part un élément (86) conformé pour coopérer avec l'extrémité d'une déformation (83) d'un panneau (81), et d'autre part un élément (87) pour recevoir en appui l'autre panneau (80).

10. Procédé selon la revendication 9, **caractérisé en ce que**, les ferrures de connexion (84) disposées en extrémité de l'assemblage de deux panneaux (80, 81), comportent des moyens (89) de coopération avec d'autres panneaux (3).

11. Procédé selon l'une quelconque des revendications 1 à 10, **caractérisé en ce qu'**on comble les formes en creux d'au moins un panneau, en sorte de créer une surface continue.

12. Procédé selon la revendication 11, **caractérisé en ce qu'**on recouvre la face comblée du panneau d'une peau (44) non structurelle.

13. Procédé selon l'une quelconque des revendications 1 à 12, **caractérisé en ce qu'**on insère dans les volumes créés entre les deux panneaux, des mécanismes et/ou un matériau isolant phonique et/ou thermique (43).

14. Procédé selon l'une quelconque des revendications 1 à 13, **caractérisé en ce que** lors de l'opération de découpe périphérique de l'un et/ou l'autre des deux panneaux, on détoure les nervures pour laisser une émerger du contour une partie extrême, que l'on usine pour servir d'élément de liaison.

15. Procédé selon la revendication 14, **caractérisé en ce que** lors de la mise en forme du et/ou des panneaux, on ferme l'une et/ou l'autre extrémité d'une ou de plusieurs déformations de profil en oméga.

16. Dispositif de cloison en matériau composite (1 ; 4 ; 8), **caractérisé en ce qu'**il est obtenu par le procédé selon l'une quelconque des revendications 1 à 15.

17. Elément constitutif d'aéronef, **caractérisé en ce qu'**il est obtenu à partir d'un dispositif de cloison (1 ; 4 ; 8) selon la revendication 16.

## Patentansprüche

1. Verfahren zur Herstellung einer Verbundtrennwandvorrichtung **dadurch gekennzeichnet, dass** es aus der aufeinanderfolgenden Durchführung der folgenden Vorgänge besteht:
- Erhalten, durch ein für das bei der Herstellung verwendete Verbundmaterial geeignetes Formgebungsverfahren, einer ersten Platte (2; 5; 80), die einerseits eine für ihren Bestimmungsort spezifische, gegebenenfalls gekrümmte Form aufweist und somit eine sogenannte Innenseite (23; 53) und eine sogenannte Außenseite (22; 52) definiert; und andererseits Längsverformungen (21; 51; 82) mit Omega-Profil umfasst, um Rippen zu bilden, die von der sogenannten Innenseite (23; 53) vorstehen,
- Zuschneiden dieser ersten Platte (2; 5; 80) am Umfang in die erforderliche Form,
- Erhalten, durch ein für das verwendete Verbundmaterial geeignetes Formgebungsverfahren, einer zweiten Platte (3; 6; 81),
die einerseits eine Form aufweist, die mit der der ersten Platte (2; 5; 80) identisch ist, und somit eine sogenannte Innenseite (33; 63) und eine sogenannte Außenseite (32; 62) umgekehrt zu denen der ersten Platte (2; 5; 80) definiert; und andererseits Längsverformungen (31; 61; 83) mit Omega-Profil mit einer Tiefe umfasst, die gleich oder unterschiedlich zu denen der ersten Platte (2; 5; 80) ist, um Rippen zu bilden, die von der sogenannten Innenseite (33; 63) vorstehen und eine andere Ausrichtung als die Verformungen (21; 51; 82) der ersten Platte (2; 5; 80) aufweisen,
- Zuschneiden dieser zweiten Platte (3; 6; 81) am Umfang in die erforderliche Form,
- Zusammenfügen der beiden Platten (2, 3; 5, 6; 80, 81) mit der Innenseite der einen (23; 53) gegen die Innenseite der anderen (33; 63), sodass sie sich an der Kreuzung der Rippen (21, 31; 51, 61; 82, 83) berühren,
- Verbinden der beiden Platten (2, 3; 5, 6; 80, 81) an den Kontaktzonen (Z) der Rippen (21, 31; 51, 61; 82, 83).

2. Verfahren nach Anspruch 1, **dadurch gekennzeichnet, dass** die erste und die zweite Platte (2, 3; 5, 6; 80, 81) aus dem Guss eines duroplastischen Verbundmaterials stammen.

3. Verfahren nach Anspruch 1, **dadurch gekennzeichnet, dass** die erste und zweite Platte (2, 3; 5, 6; 80, 81) aus der Formgebung durch Warmverformung unter Druck von Rohlingen (20, 30; 50, 60) aus thermoformbarem Verbundmaterial stammen.

4. Verfahren nach Anspruch 1, **dadurch gekennzeichnet, dass** die Rippen (21; 51; 82) der einen Platte (2; 5; 80) diejenigen (31; 61; 83) der anderen Platte (3; 6; 81) im rechten Winkel kreuzen.

5. Verfahren nach Anspruch 3 oder Anspruch 4,
**dadurch gekennzeichnet, dass** die erste und die zweite Platte (2, 3; 5, 6; 80, 81) aus thermoplastischem Verbundmaterial bestehen und durch Schweißen verbunden werden.

6. Verfahren nach einem der Ansprüche 1 bis 4,
**dadurch gekennzeichnet, dass** die beiden Platten (2, 3; 5, 6; 80, 81) durch Kleben verbunden werden.

7. Verfahren nach einem der Ansprüche 1 bis 6,
**dadurch gekennzeichnet, dass** die beiden Platten (2, 3; 5, 6; 80, 81) über zusätzliche Befestigungselemente (7; 84) verbunden werden.

8. Verfahren nach Anspruch 7, **dadurch gekennzeichnet, dass** die zusätzlichen Befestigungselemente (7) aus Paaren von Laschen (70, 71) bestehen, wobei eine erste Lasche (70) eine Fläche (72) umfasst, die dem Boden einer in einer Platte (6) ausgebildeten Verformung (61) entspricht und in welche Verformung (61) sie eingeführt wird, und eine zweite Lasche (71) eine Fläche (73) umfasst, die dem Boden einer in der anderen Platte (5) ausgebildeten Verformung (51) entspricht und in welche Verformung (51) sie eingeführt wird, und wobei sie durch Verbindungsmittel (79) fest miteinander verbunden werden, die an den Kontaktzonen (Z) der Rippen (51, 61) durch die Böden der Verformungen verlaufen.

9. Verfahren nach Anspruch 7, **dadurch gekennzeichnet, dass** die zusätzlichen Befestigungselemente aus Verbindungsbeschlägen (84) bestehen, die am Ende der Anordnung zweier Platten (80, 81) angeordnet sind und einerseits ein Element (86) umfassen, das so geformt ist, dass es mit dem Ende einer Verformung (83) einer Platte (81) zusammenwirkt, und andererseits ein Element (87), um die andere Platte (80) stützend aufzunehmen.

10. Verfahren nach Anspruch 9, **dadurch gekennzeichnet, dass** die am Ende der Anordnung zweier Platten (80, 81) angeordneten Verbindungsbeschläge (84) Mittel (89) zum Zusammenwirken mit anderen Platten (3) umfassen.

11. Verfahren nach einem der Ansprüche 1 bis 10,
**dadurch gekennzeichnet, dass** die Hohlräume mindestens einer Platte ausgefüllt werden, um eine durchgehende Fläche zu schaffen.

12. Verfahren nach Anspruch 11, **dadurch gekennzeichnet, dass** die ausgefüllte Seite der Platte mit einer nicht strukturellen Haut (44) bedeckt wird.

13. Verfahren nach einem der Ansprüche 1 bis 12,
**dadurch gekennzeichnet, dass** in die zwischen den beiden Platten (43) geschaffenen Räume Mechanismen und/oder ein Material zur Schall- und/oder Wärmedämmung eingefügt werden.

14. Verfahren nach einem der Ansprüche 1 bis 13,
**dadurch gekennzeichnet, dass** beim Zuschneidevorgang am Umfang der einen und/oder der anderen der beiden Platten die Rippen gefräst werden, um eine Kontur aus einem Endabschnitt hervorgehen zu lassen, der bearbeitet wird und als Verbindungselement dient.

15. Verfahren nach Anspruch 14, **dadurch gekennzeichnet, dass** beim Formen der Platte(n) das eine und/oder andere Ende einer oder mehrerer Verformungen mit Omega-Profil verschlossen wird.

16. Trennwandvorrichtung (1; 4; 8) aus Verbundmaterial,
**dadurch gekennzeichnet, dass** sie durch das Verfahren nach einem der Ansprüche 1 bis 15 erhalten wird.

17. Flugzeugbauteil, **dadurch gekennzeichnet, dass** es aus einer Trennwandvorrichtung (1; 4; 8) nach Anspruch 16 erhalten wird.

## Claims

1. Method for producing a composite partition device, **characterized in that** it consists in carrying out the following operations consecutively:
- obtaining, by means of a shaping method suitable for the composite material used in said production, a first panel (2; 5; 80) having a shape suitable for its destination, which is optionally curved, and thus defining a so-called inner face (23; 53) and a so-called outer face (22; 52); and the first panel comprising omega-shaped longitudinal deformations (21; 51; 82), to form ribs projecting from the so-called inner face (23; 53),
- peripherally cutting this first panel (2; 5; 80) to the required shape,
- obtaining, by means of a shaping method suitable for the composite material used, a second panel (3; 6; 81)
having a shape identical to that of said first panel (2; 5; 80), and thus defining a so-called inner face (33; 63) and a so-called outer face (32; 62) opposite to those of said first panel (2; 5; 80); and the second panel comprising omega-shaped longitudinal deformations (31; 61; 83) of equal or unequal depth to those of the first panel (2; 5; 80), to form ribs projecting from the so-called inner face (33; 63) in a different direction to that of the deformations (21; 51; 82) of said first panel (2; 5; 80),
- peripherally cutting this second panel (3; 6; 81) to the required shape,
- assembling the two panels (2, 3; 5, 6; 80, 81) with the inner face of one (23; 53) against the inner face of the other (33; 63), so that they touch at the intersection of the ribs (21, 31; 51, 61; 82, 83),
- securing the two panels (2, 3; 5, 6; 80, 81) at the contact zones (Z) of said ribs (21, 31; 51, 61; 82, 83).

2. Method according to claim 1, **characterized in that** the first panel and the second panel (2, 3; 5, 6; 80, 81) are molded from a thermosetting composite material.

3. Method according to claim 1, **characterized in that** the first panel and the second panel (2, 3; 5, 6; 80, 81) are shaped by hot press forming of blanks (20, 30; 50, 60) made of thermoformable composite material.

4. Method according to claim 1, **characterized in that** the ribs (21; 51; 82) of one panel (2; 5; 80) intersect those (31; 61; 83) of the other panel (3; 6; 81) at right angles.

5. Method according to claim 3 or claim 4, **characterized in that** the first panel and the second panel (2, 3; 5, 6; 80, 81) are made of a thermoplastic composite material and are secured together by welding.

6. Method according to any one of claims 1 to 4, **characterized in that** the two panels (2, 3; 5, 6; 80, 81) are secured together by bonding.

7. Method according to any one of claims 1 to 6, **characterized in that** the two panels (2, 3; 5, 6; 80, 81) are secured together by means of fastening attachments (7; 84).

8. Method according to claim 7, **characterized in that** the fastening attachments (7) consist of pairs of fishplates (70, 71), a first fishplate (70) comprising a face (72) shaped to match the bottom of a deformation (61) made in one panel (6) and into which deformation (61) it is introduced, and a second fishplate (71) comprising a face (73) shaped to match the bottom of a deformation (51) made in the other panel (5) and into which deformation (51) it is introduced, and **in that** they are fixedly connected through connection means (79) which pass through said deformation bottoms at the contact zones (Z) of the ribs (51, 61).

9. Method according to claim 7, **characterized in that** the fastening attachments consist of connection fittings (84), arranged at the end of the assembly of two panels (80, 81), and comprising both an element (86) shaped to engage with the end of a deformation (83) of one panel (81), and an element (87) for the other panel (80) to bear against.

10. Method according to claim 9, **characterized in that** the connection fittings (84) arranged at the end of the assembly of two panels (80, 81) comprise means (89) for engaging with other panels (3).

11. Method according to any one of claims 1 to 10, **characterized in that** the recessed shapes of at least one panel are filled, so as to create a continuous surface.

12. Method according to claim 11, **characterized in that** the filled face of the panel is covered with a non-structural skin (44).

13. Method according to any one of claims 1 to 12, **characterized in that** mechanisms and/or sound and/or heat insulating material (43) are inserted into the volumes created between the two panels.

14. Method according to any one of claims 1 to 13, **characterized in that** during the peripheral cutting operation of one and/or the other of the two panels, the ribs are cut out to leave one to emerge from the contour an end part, which is machined to serve as a connection element.

15. Method according to claim 14, **characterized in that,** during shaping of the panel(s), one and/or the other end of one or more omega-shaped deformations are closed.

16. Partition device made of composite material (1; 4; 8),
**characterized in that** it is obtained by the method according to any one of claims 1 to 15.

17. Aircraft component, **characterized in that** it is obtained from a partition device (1; 4; 8) according to claim 16.
